# EUROPÄISCHE PATENTSCHRIFT

(11) **EP 3 581 902 B1**
(45) Veröffentlichungstag und Bekanntmachung des Hinweises auf die Patenterteilung: **06.10.2021**
(21) Anmeldenummer: 19179364.5
(22) Anmeldetag: 11.06.2019
(51) Int. Cl.: G01L 1/04, G01L 1/22

(54) **VORRICHTUNG ZUR MESSUNG EINER KRAFT**
DEVICE FOR MEASURING A FORCE
DISPOSITIF DE MESURE D'UNE FORCE

(30) Priorität: 14.06.2018 DE 102018209592
(43) Veröffentlichungstag der Anmeldung: 18.12.2019
(73) Patentinhaber: Hoffmann + Krippner GmbH, 74722 Buchen (DE)
(72) Erfinder: Gehrig, Martin, 74731 Walldürn - Glashofen (DE); Berres, Stefan, 74731 Walldürn (DE)
(74) Vertreter: Ullrich & Naumann PartG mbB

(56) Entgegenhaltungen:
- EP-A2- 1 931 184
- DE-A1-102006 016 813
- DE-A1-102007 026 827
- DE-U1-202009 003 574
- US-A1- 2016 327 441
- US-A1- 2018 072 186

## Beschreibung

Die Erfindung betrifft eine Vorrichtung zur Messung einer Kraft gemäß dem Oberbegriff des Anspruchs 1.

Eine Vorrichtung der eingangs genannten Art ist beispielsweise aus der EP 1 931 184 A2 bekannt. Dabei weist die bekannte Vorrichtung eine Leiterplatte auf, wobei die Leiterplatte - mit den dortigen Bezugsziffern - einen relativ zu einem Basisbereich der Leiterplatte verformbaren Sensorbereich 2 und eine elektrische Schaltung 3 zur Messung eines Umfangs und/oder einer Richtung einer Verformung des Sensorbereichs 2 mit Hilfe einer sich mit der Verformung verändernden elektrischen Größe aufweist. Der Sensorbereich 2 weist einen gegen den Basisbereich der Leiterplatte verbiegbaren Balken 4 auf, der mit dem Basisbereich der Leiterplatte über einen Biegebereich verbunden ist. In diesem Biegebereich sind Widerstände 6 aufgebracht, deren elektrischer Widerstand sich verändert, wenn der Biegebalken 4 gegen den Basisbereich verbogen wird. Die Widerstände 6 können im Rahmen eines Dehnungsmessstreifens realisiert sein.

Mit der bekannten Vorrichtung können einerseits eine für die Verformung aufzubringende Kraft und andererseits die Verformung selbst gemessen werden, wobei das Haupteinsatzgebiet der bekannten Vorrichtung die Messung der Verformung und nicht die Messung der für die Verformung erforderlichen Kraft ist. Dies liegt daran, dass die für die Verformung erforderliche Kraft in komplexer Weise von unterschiedlichen Komponenten abhängt wie beispielsweise die mechanische Ausgestaltung des Sensorbereichs und des Biegebalkens hinsichtlich dessen Form und Materialstärke und auch ganz wesentlich das Material der Leiterplatte und des Sensorbereichs.

Ein üblicherweise bei einer Leiterplatte eingesetztes Material ist beispielsweise ein Epoxy-Leiterplattenmaterial und damit ein faserverstärkter Kunststoff. Bei der bekannten Vorrichtung ist besonders problematisch, dass dieses Material insbesondere bei höheren Temperaturen und einer länger andauernden Verformung zu einem Fließen und damit zu einer dauerhaften Verformung neigt. Neben diesem Nachteil der dauerhaften Verformung aus einem ursprünglichen unverformten Zustand des Sensorbereichs ergibt sich weiterhin die für eine Kraftmessung äußerst nachteilige Wirkung, dass sich eine für einen bestimmten Umfang der Verformung zu erbringende Kraft hierdurch verändert. Eine zuverlässige Kraftmessung ist damit nicht mehr gewährleistet.

Des Weiteren ist aus der DE 10 2006 016813 A1 eine Vorrichtung zur Messung einer Kraft mit einem Gehäuse 1 bekannt, das eine Sollbiegestelle 4 aufweist, auf die der zu erfassende Druck bzw. die zu erfassende Kraft einwirkt.

Aus der DE 20 2009 003574 U1 ist eine Vorrichtung zur Messung einer Kraft bekannt, wobei diese Vorrichtung im Wesentlichen einen Aufbau wie die Vorrichtung aus der bereits oben erwähnten EP 1 931 184 A2 aufweist.

Die US 2018/072186 A1 zeigt ebenfalls eine Vorrichtung zur Messung einer Kraft, wobei ein Sensor 5 zur Detektion einer Last vorgesehen ist, der in einem Gehäuse 3 angeordnet ist und flächige Elektroden 50 und 60 aufweist.

Die DE 10 2007 026827 A1 und die US 2016/327441 A1 zeigen ebenfalls Vorrichtungen zur Messung einer Kraft, wobei das erstgenannte Dokument eine Leiterplatte 3 mit einem verformbaren Bereich 2 aufweist und das andere Dokument eine Vorrichtung mit einem druckempfindlichen Film 14 und einer Sensorelektrode 12 aufweist.

Der vorliegenden Erfindung liegt daher die Aufgabe zugrunde, eine Vorrichtung zur Messung einer Kraft der eingangs genannten Art anzugeben, mit der eine sichere und zuverlässige Messung einer Kraft mit konstruktiv einfachen Mitteln ermöglicht ist.

Erfindungsgemäß wird die voranstehende Aufgabe durch eine Vorrichtung mit den Merkmalen des Anspruchs 1 gelöst. Danach ist die bekannte Vorrichtung derart ausgestaltet und weitergebildet, dass das Rückstellelement als zumindest bereichsweise in der Leiterplatte angeordnete Einlage ausgebildet ist, wobei die Einlage nur in einem biegebeanspruchten oder verformbaren Bereich der Leiterplatte angeordnet ist.

Der Sensorbereich ist ganz konkret mit einem Rückstellelement versehen. Dieses Rückstellelement hat die vorteilhafte Wirkung, dass eine aus einem unverformten Zustand des Sensorbereichs mittels einer Krafteinwirkung erfolgte Verformung des Sensorbereichs nach Ende der Krafteinwirkung mittels des Rückstellelements wieder in den unverformten Zustand des Sensorbereichs rückstellbar ist. Damit können negative Effekte eines üblichen Leiterplattenmaterials - wie beispielsweise ein Fließen bei höheren Temperaturen und eine daraus folgende dauerhafte Verformung - auf einfache Weise überwunden werden. Eine für einen bestimmten Umfang einer Verformung aufzubringende Kraft bleibt auch bei wiederholter entsprechender Verformung und Rückstellung weitestgehend gleich. Das Rückstellelement gewährleistet die zuverlässige Rückstellung in den ursprünglichen unverformten Zustand - einen sog. "Nullpunkt" - des verformbaren Sensorbereichs.

In konstruktiv einfacher Weise kann das Rückstellelement aus einem elastischen Material ausgebildet sein oder ein elastisches Material aufweisen. Durch die elastische Eigenschaft ist eine sichere Rückstellung des verformten Sensorsbereichs in seinen unverformten Zustand gewährleistet. In konstruktiv einfacher Weise kann das Material ein Metall sein, wobei sich insbesondere ein Federstahl, Stahl, Edelstahl oder Aluminium als geeignete Materialien für die konkrete Anwendung der Messung einer Kraft mittels einer Leiterplatte gezeigt haben.

Das Rückstellelement ist als zumindest bereichsweise in der Leiterplatte angeordnete Einlage ausgebildet. Hierbei kann das Rückstellelement ganz gezielt an einer für die sichere Rückstellung des Sensorbereichs erforderlichen Stelle ausgebildet oder angeordnet sein. Dabei ist es nicht erforderlich, die gesamte Leiterplatte mit einem als Kern ausgebildeten Rückstellelement zu versehen. Die Leiterplatte kann in diesem Fall einen häufig verwendeten Aufbau mit einem Kern aus beispielsweise einem FR4-Material, einem mit Epoxidharz getränkten Glasfasermattenmaterial, aufweisen.

Ganz konkret ist die Einlage nur in einem biegebeanspruchten oder verformbaren Bereich der Leiterplatte, vorzugsweise im Sensorbereich, angeordnet sein. Eine Anordnung der Einlage und damit des Rückstellelements in anderen Bereichen ist nicht zwingend erforderlich. Insoweit ist eine Materialersparnis hinsichtlich des Materials des Rückstellelements im Vergleich mit einer Ausbildung des Rückstellelements als Kern der Leiterplatte ermöglicht. Die Einlage kann in weiter vorteilhafter Weise flächig im gesamten Sensorbereich oder in Form von Einzelelementen, beispielsweise parallel zueinander verlegte Materialstreifen, realisiert sein. Je nach Materialmenge oder Materialstärke oder Anzahl an Einzelelementen kann die durch das Rückstellelement erzeugte Rückstellkraft in geeigneter Weise definiert sein.

Bei einer besonders einfachen Ausgestaltung der Vorrichtung kann die Einlage in einer Prepreg-Schicht angeordnet sein, wobei die Prepreg-Schicht vorzugsweise aus einem FR4-Material ausgebildet sein kann. Bei einer Realisierung des Rückstellelements als Einlage kann der Kern der Leiterplatte ein jeweils erforderliches oder gewünschtes Material aufweisen. Ein Einbringen der Einlage ist in quasi jedes Kernmaterial möglich.

Im Hinblick auf eine besonders kompakte Ausgestaltung der Vorrichtung mit hoher Zuverlässigkeit der Messung einer Kraft können oder kann auf der Leiterplatte eine Auswerteelektronik und/oder Übertragungselektronik angeordnet sein. Eine Auswerteelektronik ermöglicht die direkte Auswertung der Messung auf der Leiterplatte. Mit einer geeigneten Übertragungselektronik können bei der Messung des Umfangs und/oder der Richtung einer Verformung des Sensorbereichs aufgenommene Messwerte zu einer geeigneten Auswerteeinheit übertragen werden. Dabei ist eine drahtlose Übertragung per Funk oder über optische Signale besonders vorteilhaft.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der erfindungsgemäßen Vorrichtung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in einer schematischen Draufsicht eine nicht zur Erfindung gehörende Vorrichtung zur Messung einer Kraft,
- Fig. 2: in einer geschnittenen Darstellung, teilweise, einen Aufbau einer Leiterplatte einer nicht zur Erfindung gehörenden Vorrichtung mit einem als Kern der Leiterplatte ausgebildeten Rückstellelement und einer beidseitigen Kaschierung der Leiterplatte,
- Fig. 3: geschnitten und teilweise eine weitere Leiterplatte einer nicht zur Erfindung gehörenden Vorrichtung zur Messung einer Kraft, wobei im Vergleich zur Fig. 2 lediglich eine einseitige Kaschierung vorgesehen ist,
- Fig. 4: geschnitten und teilweise eine weitere Leiterplatte einer nicht zur Erfindung gehörenden Vorrichtung zur Messung einer Kraft mit einem als Kern der Leiterplatte ausgebildeten Rückstellelement, wobei die Leiterplatte beidseitig mit einer Isolationsschicht kaschiert ist,
- Fig. 5: geschnitten und teilweise eine weitere Leiterplatte analog zu der Leiterplatte aus Fig. 4, wobei lediglich eine einseitige Kaschierung mit einer Isolationsschicht vorgenommen ist, und
- Fig. 6: geschnitten und teilweise ein Ausführungsbeispiel einer Leiterplatte einer erfindungsgemäßen Vorrichtung zur Messung einer Kraft, wobei das Rückstellelement als bereichsweise in der Leiterplatte angeordnete Einlage ausgebildet ist.

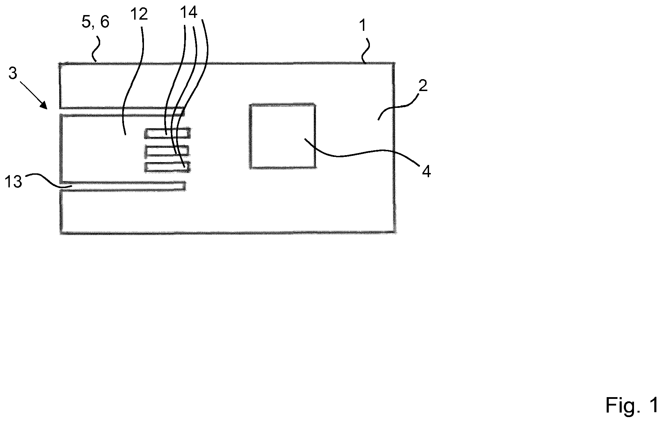

Fig. 1 zeigt eine nicht zur Erfindung gehörende Vorrichtung zur Messung einer Kraft in einer schematischen Draufsicht. Die Vorrichtung weist eine Leiterplatte 1 auf, wobei die Leiterplatte 1 einen relativ zu einem Basisbereich 2 der Leiterplatte 1 verformbaren Sensorbereich 3 und eine elektrische Schaltung 4 zur Messung eines Umfangs und/oder einer Richtung einer Verformung des Sensorbereichs 3 mit Hilfe einer sich mit der Verformung verändernden elektrischen Größe aufweist. Der Sensorbereich 3 weist einen Biegebalken 12 auf, der relativ zum Basisbereich 2 der Leiterplatte 1 verformbar, d.h. nach unten oder oben biegbar ist oder auch tordiert werden kann. Mit der Schaltung 4 kann der Umfang und/oder die Richtung einer derartigen Verformung des Sensorbereichs 3 gemessen werden. Zwischen dem Biegebalken 12 und dem Basisbereich 2 ist ein Schlitz 13 ausgebildet, damit eine behinderungsfreie Verbiegung oder Verformung des Biegebalkens 12 ermöglicht ist. Zur Messung des Umfangs und/oder der Richtung der Verformung sind in einem Anlenkbereich des Biegebalkens 12 am Basisbereich 2 Dehnungsmessstreifen 14 auf der Leiterplatte 1 angebracht. Je nach Umfang und/oder Richtung der Verformung verändern diese Dehnungsmessstreifen 14 ihren elektrischen Widerstand, anhand dessen die Verformung gemessen werden kann.

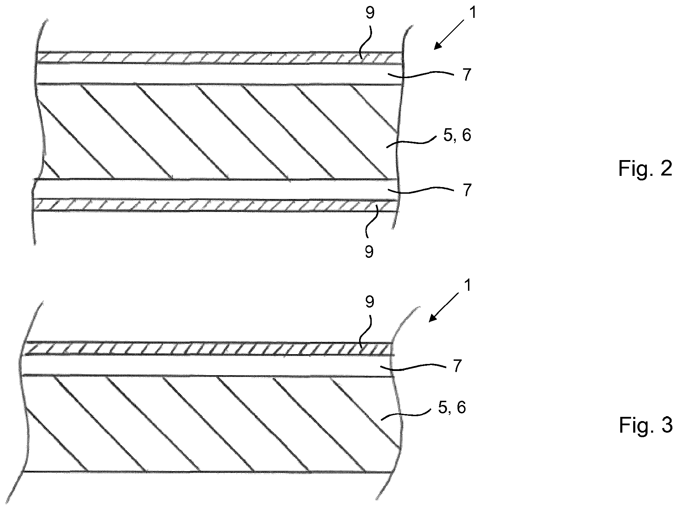

Im Hinblick auf eine sichere und zuverlässige Messung einer Kraft mit konstruktiv einfachen Mitteln weist der Sensorbereich 3 ein Rückstellelement 5 auf, das bei der hier gezeigten Vorrichtung - wie auch bei der Vorrichtung gemäß Fig. 2 gezeigt - als Kern 6 der Leiterplatte 1 entlang der gesamten Fläche der Leiterplatte 1 ausgebildet ist. Mit dem Rückstellelement 5 ist eine aus einem unverformten Zustand des Sensorbereichs 3 mittels einer Krafteinwirkung erfolgte Verformung des Sensorbereichs 3 nach Ende der Krafteinwirkung in den unverformten Zustand des Sensorbereichs 3 rückstellbar. Der Nachteil herkömmlicher Materialien, die zu einem Fließen und zu einer dauerhaften Verformung des Sensorbereichs 3 neigen, sind durch das Rückstellelement 5 überwunden. Das Rückstellelement 5 ist bei der hier gezeigten Vorrichtung als Aluminiumkern 6 der Leiterplatte 1 ausgebildet.

Fig. 2 zeigt in einer teilweise und geschnittenen Darstellung die Leiterplatte 1 gemäß der Vorrichtung aus Fig. 1. Der Aufbau dieser Leiterplatte 1 weist ein als Aluminiumkern 6 der Leiterplatte 1 ausgebildetes Rückstellelement 5 auf. Dieser Aluminiumkern 6 ist beidseitig mit einem Prepreg 7 kaschiert, auf dem des Weiteren auf beiden Seiten eine Kupferfolie 9 aufgebracht ist.

Fig. 3 zeigt in einer teilweisen und geschnittenen Darstellung eine weitere Leiterplatte 1 einer nicht zur Erfindung gehörenden Vorrichtung, wobei diese Vorrichtung der in Fig. 2 gezeigten Vorrichtung bis auf die doppelseitige Kaschierung entspricht. Die hier in Fig. 3 gezeigte Vorrichtung weist lediglich eine einseitige Kaschierung mit Prepreg 7 und Kupferfolie 9 auf.

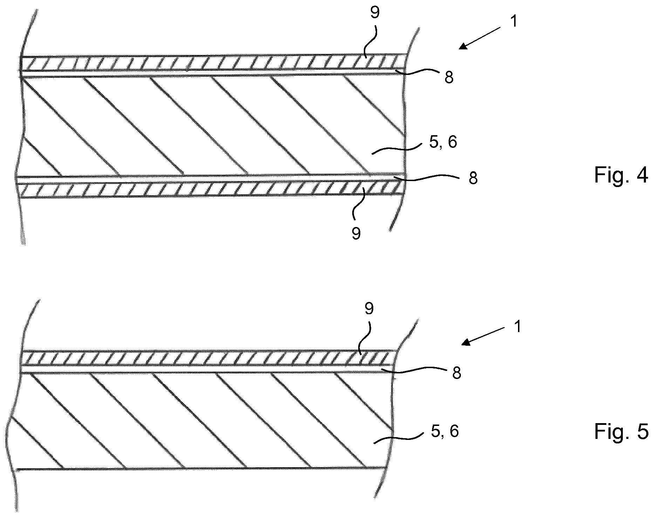

Fig. 4 zeigt geschnitten und teilweise eine weitere Leiterplatte 1 einer nicht zur Erfindung gehörenden Vorrichtung. Auch hier ist das Rückstellelement 5 durch einen Aluminiumkern 6 der Leiterplatte 1 gebildet. Dieser Aluminiumkern 6 ist beidseitig mit einer Isolationsschicht 8 aus einem Dielektrikum kaschiert. Auf diese Isolationsschicht 8 ist auf beiden Seiten der Leiterplatte 1 eine Kupferfolie 9 aufgebracht.

Fig. 5 zeigt teilweise und geschnitten eine weitere Leiterplatte 1 einer nicht zur Erfindung gehörenden Vorrichtung, wobei diese Vorrichtung der Vorrichtung aus Fig. 4 bis auf die beidseitige Kaschierung entspricht, da die in Fig. 5 gezeigte Vorrichtung lediglich einseitig mit einer Isolationsschicht 8 aus einem Dielektrikum kaschiert ist. Auf der Isolationsschicht 8 ist eine Kupferfolie 9 aufgebracht.

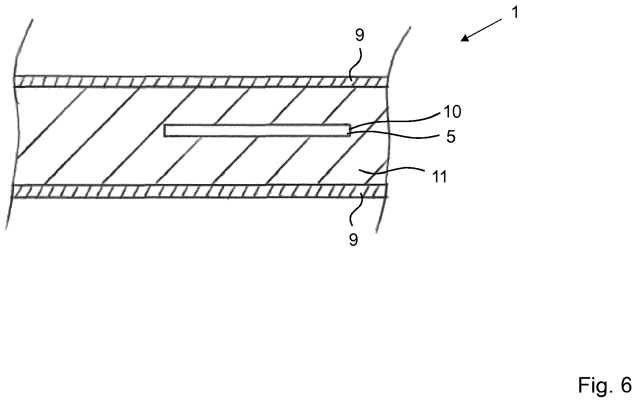

Fig. 6 zeigt teilweise und geschnitten ein Ausführungsbeispiel einer Leiterplatte 1 einer erfindungsgemäßen Vorrichtung, wobei die Leiterplatte ein als Einlage 10 ausgebildetes Rückstellelement 5 aufweist. Die Einlage 10 ist in einer Prepreg-Schicht 11 bereichsweise angeordnet. Die Prepreg-Schicht 11 bildet hier den Kern der Leiterplatte 1. Auf beiden Seiten der Prepreg-Schicht 11 ist ein Kupferlaminat oder eine Kupferfolie 9 aufgebracht. Die Einlage 10 ist aus Edelstahl ausgebildet und lediglich in einem biegebeanspruchten Bereich des Sensorbereichs 2 angeordnet.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

### Bezugszeichenliste

- 1: Leiterplatte
- 2: Basisbereich
- 3: Sensorbereich
- 4: Schaltung
- 5: Rückstellelement
- 6: Kern
- 7: Prepreg
- 8: Isolationsschicht
- 9: Kupferfolie
- 10: Einlage
- 11: Prepreg-Schicht
- 12: Biegebalken
- 13: Schlitz
- 14: Dehnungsmessstreifen

## Patentansprüche

1. Vorrichtung zur Messung einer Kraft, mit einer Leiterplatte (1), wobei die Leiterplatte (1) einen relativ zu einem Basisbereich (2) der Leiterplatte (1) verformbaren Sensorbereich (3) und eine elektrische Schaltung (4) zur Messung eines Umfangs und/oder einer Richtung einer Verformung des Sensorbereichs (3) mit Hilfe einer sich mit der Verformung verändernden elektrische Größe aufweist, wobei der Sensorbereich (3) ein Rückstellelement (5) aufweist, so dass eine aus einem unverformten Zustand des Sensorbereichs (3) mittels einer Krafteinwirkung erfolgte Verformung des Sensorbereichs (3) nach Ende der Krafteinwirkung mittels des Rückstellelements (5) in den unverformten Zustand des Sensorbereichs (3) rückstellbar ist,
**dadurch gekennzeichnet, dass** das Rückstellelement (5) als zumindest bereichsweise in der Leiterplatte (1) angeordnete Einlage (10) ausgebildet ist, wobei die Einlage (10) nur in einem biegebeanspruchten oder verformbaren Bereich der Leiterplatte (1) angeordnet ist.

2. Vorrichtung nach Anspruch 1, **dadurch gekennzeichnet, dass** das Rückstellelement (5) aus einem elastischen Material ausgebildet ist oder ein elastisches Material aufweist, wobei das Material vorzugsweise ein Metall, insbesondere ein Federstahl, Stahl, Edelstahl oder Aluminium ist.

3. Vorrichtung nach Anspruch 1 oder 2, **dadurch gekennzeichnet, dass** die Einlage (10) im Sensorbereich (3) angeordnet ist.

4. Vorrichtung nach einem der Ansprüche 1 bis 3, **dadurch gekennzeichnet, dass** die Einlage (10) in einer Prepreg-Schicht (11) angeordnet ist, wobei die Prepreg-Schicht (11) vorzugsweise aus einem FR4-Material ausgebildet ist.

5. Vorrichtung nach einem der Ansprüche 1 bis 4, **dadurch gekennzeichnet, dass** auf der Leiterplatte (1) eine Auswerteelektronik und/oder Übertragungselektronik angeordnet ist.

## Claims

1. Device for measuring a force, having a printed circuit board (1), wherein the printed circuit board (1) has a sensor region (3) which can be deformed relative to a base region (2) of the printed circuit board (1) and an electric circuit (4) for measuring an extent and/or a direction of a deformation of the sensor region (3) using an electrical variable which changes with the deformation, wherein
the sensor region (3) has a restoring element (5) so that a deformation of the sensor region (3) produced from a non-deformed state of the sensor region (3) by means of an action of force can be restored after the end of the action of the force by means of the restoring element (5) into the non-deformed state of the sensor region (3),
**characterised in that** the restoring element (5) is formed as an insert (10) which is arranged at least in regions in the printed circuit board (1), wherein the insert (10) is arranged only in a region of the printed circuit board (1) which is subjected to bending load or which can be deformed.

2. Device according to claim 1, **characterised in that** the restoring element (5) is formed from a resilient material or has a resilient material, wherein the material is preferably a metal, in particular a spring steel, steel, high-grade steel or aluminium.

3. Device according to claim 1 or 2, **characterised in that** the insert (10) is arranged in the sensor region (3).

4. Device according to any one of claims 1 to 3, **characterised in that** the insert (10) is arranged in a prepreg layer (11), wherein the prepreg layer (11) is preferably formed from an FR4 material.

5. Device according to any one of claims 1 to 4, **characterised in that** an electronic evaluation unit and/or electronic transmission unit is/are arranged on the printed circuit board (1).

## Revendications

1. Dispositif de mesure d'une force, avec un circuit imprimé (1), dans lequel le circuit imprimé (1) comprend une partie de capteur (3) déformable par rapport à une partie de base (2) du circuit imprimé (1) et un circuit électrique (4) pour la mesure de l'étendue et/ou de la direction d'une déformation de la partie de capteur (3) à l'aide d'une grandeur électrique variant en fonction de la déformation, dans lequel
la partie de capteur (3) comprend un élément de rappel (5), de façon à ce qu'une déformation de la partie de capteur (3) à partir d'un état non déformé de la partie de capteur (3) au moyen de l'application d'une force puisse être inversée, après l'application de la force, au moyen de l'élément de rappel (5), vers l'état non déformé de la partie de capteur (3),
**caractérisé en ce que** l'élément de rappel (5) est conçu comme un insert (10) disposé, au moins à certains endroits, sur le circuit imprimé (1), dans lequel l'insert est disposé uniquement dans une partie sollicitée en flexion ou déformable du circuit imprimé (1).

2. Dispositif selon la revendication 1, **caractérisé en ce que** l'élément de rappel (5) est réalisé à partir d'un matériau élastique ou comprend un matériau élastique, dans lequel le matériau est de préférence un métal, plus particulièrement un acier ressort, un acier, un acier inoxydable ou de l'aluminium.

3. Dispositif selon la revendication 2 ou 3, **caractérisé en ce que** l'insert (10) est disposé dans la partie de capteur (3).

4. Dispositif selon l'une des revendications 1 à 3, **caractérisé en ce que** l'insert (10) est disposé dans une couche pré-imprégnée (11), dans lequel la couche pré-imprégnée (11) est constituée de préférence d'un matériau FR4.

5. Dispositif selon l'une des revendications 1 à 4, **caractérisé en ce que**, sur le circuit imprimé (1), est disposée une électronique d'analyse et/ou une électronique de transmission.
